# EUROPEAN PATENT APPLICATION

(11) **EP 1 961 689 A1**
(43) Date of publication of application: **27.08.2008**
(21) Application number: 07102889.8
(22) Date of filing: 22.02.2007
(51) Int. Cl.: B66C 1/66, B23P 19/06, F16B 37/06

(54) **Fastening device, component, kit and method adapted for manufacturing said device**

(71) Applicant: Stamperia Carcano Giuseppe S.p.A., 22032 Albese con Cassano (IT)
(72) Inventor: Frigerio, Roberto, 22030 Orsenigo (IT)
(74) Representative: Gervasi, Gemma

(57) **Abstract**

A fastening device comprising a screw (2) adapted to fix a object to be secured or lifted and a body (3) rotating about said screw having a lifting ring (1) and a bushing (6) adapted to accommodate said screw, characterised in that said screw displays an annular underhead cavity (13). A margin of the hole of the bushing displays, at the end where there is the screw head, a protuberance (14) obtained by deformation of a pre-existing lip (14') by riveting the screw head against the bushing; the protuberance is at least in part accommodated in said cavity and prevents the screw from being subsequently removed from the bushing.
Component, kit and method for manufacturing said device.

## Description

### FIELD OF THE INVENTION

The present invention relates to a fastening device, of the type comprising a screw for the fixing to an object, and a connecting element, for example similar to a ring, secured to an element rotating about said screw, preferably in a rotating manner.

### PRIOR ART

Fastening devices for the lifting of heavy objects of various type, comprising a ring adapted to fix and lift by means of ropes, chains, hoists or other, are known. The ring is fixed in rotating manner to a body, which is in turn fixed by means of a screw to the object to be lifted and may also be an open ring, of adequate rigidity, which forms a closed ring with said body. This body is also rotating about the axis of the screw: usually the screw is inserted in a through bushing in said body. This is rotating about the bushing, for example in virtue of an appropriate clearance. The screw is fastened in the object and against a flange of the bushing, with an adequate, predetermined tightening torque. In this manner, the aforesaid body is rotating regardless of the fastening modality of the screw.

A problem related to similar devices is the possibility of loosing some components when the device is not mounted. Specifically, the screw may be easily removed from or slip off the bushing and may be replaced. Being devices for lifting objects weighing even tons, it is apparent how the possible replacement of such components with others of unsuitable features could cause very severe consequences.

EP 1 136 416 describes an object of the above-discussed type in which an annular cavity about the screw intended to accommodate an elastic ring of appropriate section is contemplated. The ring has a diameter so as to protrude outwards from the cavity and interfere with the internal walls of the bushing. The depth of the cavity is such that it allows the ring to be narrowed during the insertion of the screw. The bushing displays an annular groove in such position to be at the cavity when the screw is inserted. In such a manner, the ring may expand again and interfere with said groove when the screw is fully inserted. The removal of the screw is impossible unless a specific tool is used.

The above-described device, if supplied correctly assembled, offers good security against the accidental replacement of the screw.

It is however complex and costly to manufacture, due to the number of components and the series of additional processes on components. Also during the assembly step, the positioning of the ring on the ways prior to the insertion in the bushing implies an additional operation which requires a specific machinery. The dimensioning of the various components, specifically the depth of the groove and the dimensions and elasticity of the elastic ring must be precise to prevent an undesired removal. An incomplete insertion of the screw during the assembly step would allow the subsequent removal thereof, with this condition not being easily detectable, because the friction however exerted by the ring on the walls of the bushing would maintain the screw in an apparently correct manner. An incorrect positioning of the ring on the screw could cause the underhead slipping thereof, out from the bushing during insertion. The depth of the cavity on the screw, so as to be able to accommodate a ring of appropriate dimensions, may be considerable also regarding the aspect of mechanical strength of the screw.

### SUMMARY

The above-identified problems have been solved according to the present invention by a fastening device comprising:
a rotating body;
a bushing rotationally fixed to said rotating body having a through hole therein;
a screw, adapted to fix the device in an object, having a shank accommodated in the hole of said bushing and a head of dimensions so as not to be able to pass through said hole;
a connecting element, fixed to said rotating body, preferably in rotating or oscillating manner;
characterised in that said screw displays a cavity in its shank near the head, and said bushing displays, at one end of the hole and integral with the bushing itself, a protuberance which extends within said cavity, so as to prevent the removal of the screw from the bushing.

According to an embodiment of the invention, said protuberance is obtained by deformation of a lip at the end of said hole before the insertion of the screw, preferably by means of riveting of the screw head against the bushing. The cavity is preferably annular and extends for the entire circumference of the screw and, according to an embodiment of the invention, this also applies to the protuberance. The cavity preferably extends from the screw head.

The invention further relates to a component for manufacturing a fastening device comprising:
a rotating body;
a bushing rotationally fixed to said rotating body having a through hole therein adapted to accommodate the shank of a screw;
a connecting element, fixed to said rotating body, preferably in rotating or oscillating manner;
characterised in that said bushing displays, at an end of the hole and integral with the bushing itself, a lip adapted to be deformed to form a protuberance adapted to extend within a cavity provided in the shank and near the screw head inserted with the shank in the hole of the bushing, by riveting the screw head against the bushing, so as to prevent the screw from being removed from the hole.

Said lip must be such that it allows the screw to be inserted before deformation.

The invention also relates to an assembly kit of a device as described above, comprising a component and a screw as described above.

The invention also relates to an assembly method of a device as described above comprising the following operations:
introduction of a screw as described above in the hole of the bushing of a component as described above, with the screw head on the part of the end which displays said lip;
riveting the screw head against the bushing so as to cause the deformation of the lip so as to form a protuberance as described above.

The object of the invention is specifically contained in the accompanying claims.

### LIST OF FIGURES

The present invention will now be illustrated by means of the detailed description of preferred, but not exclusive, embodiments provided by way of example only, with the aid of the accompanying figures in which:
figure 1 schematically shows a perspective view of a device according to the present invention;
figure 2a schematically shows a section view of a component and a screw for the assembly of a device according to the present invention, with the screw inserted before the deformation of the lip;
figure 2b shows a magnification of the portion included in the circle indicated by letter A in figure 2a;
figure 3a schematically shows a section view of a device according to the present invention;
figure 3b shows a magnification of the portion included in the circle indicated by letter B in figure 3a.

### DETAILED DESCRIPTION OF AN EMBODIMENT

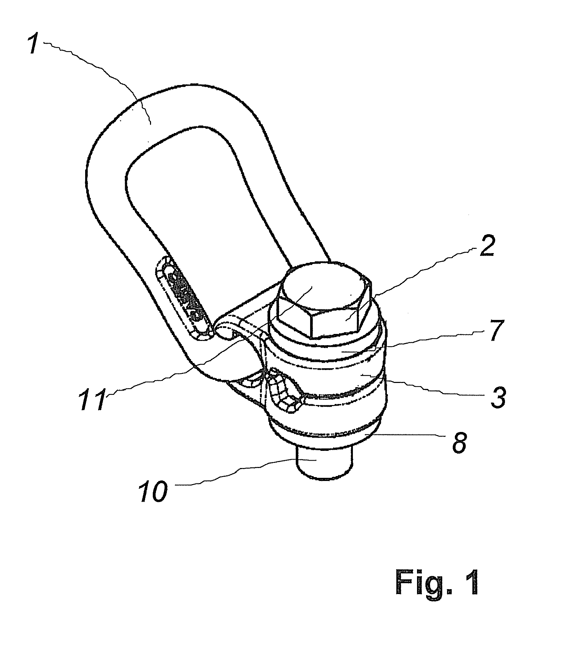

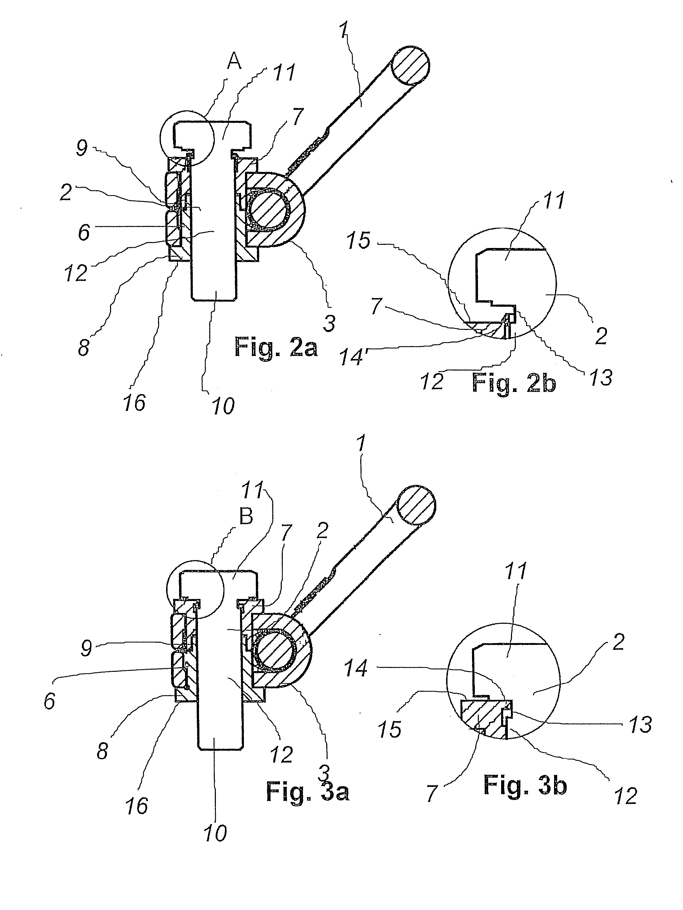

Figures 1 and 3a show a fastening device according to the present invention. The device comprises connecting element 1, adapted to secure and/or lift, by means of ropes, cords, hooks, hoists or any other known mode, an object to which the device is fixed by means of screw 2. The connecting element may be a ring, of various shape, as shown in the figures, and is fixed to rotating body 3. It may also be an open ring, whose folded ends are accommodated in a cavity of the rotation body or other. Preferably, the connecting element is rotational or oscillating or jointed with respect to body 3. Body 3 is adapted to be fixed to an object by means of a screw 2. Screw 2 is accommodated in a bushing 6 provided with a through hole. The bushing is rotating within rotating body 3, and is preferably withheld therein by flanges 7 and 8, placed at its ends. The bushing and the rotating body may be made in known manner. The rotating body may be formed by one or more parts and is adapted to withhold connecting element 1 and to allow the assembly thereof when the bushing is disassembled; as shown in figure 1, it may be formed by one part, which, by bending, accommodates and secures element 1, and the fixing of the bushing and the subsequent fastening by means of screw do not allow the opening thereof. Being a known element, no further description is required.

Also bushing 6 may be formed in known manner, except for the lip or protuberance described in better detail below. As usually occurs, it may consist of two bushings 3 and 4, each having a flange and having complementary ends, as shown in figures 2a and 3a adapted to be inserted one inside the other, preferably with an adequate interference to withhold them in position. Male end 9 of one of the bushings may also have a certain tapering. Also in this case, the bushing is of the known type and no further description is required.

In the case depicted, body 3 is rotating about bushing 6 (and therefore about screw 2) about an axis perpendicular to a plane on which the axis of rotation of connecting element 1 lays. Other solutions are however possible, if required.

Variants of any suitable type may be selected, for either the bushing, or the rotating body or the connecting element.

Screw 2 is adapted to fix the device to an object, either by screwing its end 10, protruding from bushing 6 into a threaded hole in said object, or by fastening in a through hole by means of a nut.

According to a preferred embodiment, the bushing displays on its ends flanges 7 and 8, coaxial with the hole of the bushing, adapted to be fastened one against the head 11 of screw 2, and the other against the surface of the object (either directly or by means of washers or other commonly used elements).

As mentioned, the flanges may withhold the bushing in the rotating element and the clearance between the various parts allows the rotating element to be turned.

Figure 3 shows how, near and preferably in contact with head 11 of screw 2, shank 12 of the screw displays cavity 13, preferably annular, i.e. extended to the entire circumference and with the same depth.

The end of bushing 6 from the side of screw head, at the margin of the hole, displays protuberance 14, which may also be annular, as in the case shown, or formed by one or more discontinuous parts, which extends within the cavity so as to prevent the screw from being removed.

How this can be obtained is explained with reference to figures 2a ad 2b, where screw 2 (like references are used for like elements in the other figures) is shown inserted in the components comprising bushing 6 and body 3. With reference to figure 2b, the bushing displays lip 14', having a shape corresponding to protuberance 14 in figure 3b to be obtained. The lip is such that it allows the screw to be inserted in the hole of the bushing and preferably extends outwards from surface 15 of flange 7 intended to be fastened against the screw head. It is shown how the riveting or chamfering of the screw head against the bushing causes the deformation of the lip to obtain the protuberance and obtain the configuration of figures 3a and 3b. The riveting may occur by applying, in known manner, a mechanical counter reaction onto surface 16 of flange 8 opposite to the screw head. A person skilled in the art may design tools or machinery suitable for this purpose.

The shape and size of the lip may be easily determined by a person skilled in the art to give the required result, in terms of processing ease and resistance against removal of the screw by means of breaking the obtained device. In the case depicted, the lip is essentially frustoconical shaped and also extends towards the inside of the hole of the bushing, without however interfering with the screw before deformation.

As mentioned, lip (and thus protuberance) and cavity may also be discontinuous if deemed suitable. It is however evident that the cavity is much more preferably annular. Indeed, in such manner, there is the advantage of no problems arising in the positioning of the screw for riveting, in addition to the fact that the subsequent tightening of the screw is allowed without feeding the bushing, and obviously, a greater processing ease of the screw.

The present invention allows to obtain a device which may be supplied by the manufacturer with the screw inserted. The screw cannot be extracted or replaced without breaking. Manufacture is simpler, more cost-effective and less subject to defects with respect to the discussed known art, both in the case of manual assembly and in the case of fully automated machinery. In the case that the bushing is formed, as in the above-described case, by two parts fitted into each other, the riveting further promotes an appropriate fitting, which is difficult to be accidentally released.

The materials may be appropriately chosen and may be similar to the generally metallic materials, commonly used for manufacturing similar devices, if required.

## Claims

1. A fastening device, comprising:
a rotating body (3);
a bushing (6) rotationally fixed to said rotating body having a through hole therein;
a screw (2), adapted to fix the device in an object, having a shank (12) accommodated in the hole of said bushing and a head (11) of dimensions so as not to be able to pass through said hole;
a connecting element (1), fixed to said rotating body, preferably in rotating or oscillating manner;
**characterised in that** said screw displays a cavity (13) in its shank near the head, and said bushing displays, at one end of the hole and integral with the bushing itself, a protuberance (14) which extends within said cavity, so as to prevent the screw to be removed from the bushing.

2. A device according to claim 1, wherein said cavity is annular.

3. A device according to any of the preceding claims, wherein said cavity extends from the screw head.

4. A component for the manufacture of a fastening device, comprising:
a rotating body (3);
a bushing (6) rotationally fixed to said rotating body having a through hole therein adapted to accommodate the shank (12) of a screw (2);
a connecting element (1), fixed to said rotating body, preferably in rotating or oscillating manner;
**characterised in that** said bushing displays, at an end of the hole and integral with the bushing itself, a lip (14') adapted to be deformed to form a protuberance (14) adapted extend within a cavity (13) provided in the shank (12) and near the head (11) of a screw inserted with the shank into the hole of the bushing, by riveting the screw head against the bushing, so as to prevent the screw from being removed from the hole.

5. A device or component according to any of the preceding claims, wherein said bushing displays two flanges (7, 8) at the ends and said protuberance or lip protrudes from one of said flanges.

6. A device or component according to any of the preceding claims, wherein said protuberance or lip is annular.

7. A component according to any of the claims from 4 to 6, wherein said lip extends towards the outside of the bushing.

8. A component according to any of the claims from 4 to 7, wherein said lip has an essentially conical or frustoconical shape.

9. A kit for the manufacture of a fastening device according to any of the claims from 1 to 3, comprising a component according to any of the claims from 4 to 8 and a screw (2), adapted to fix the device in an object, having a shank (12) adapted to be inserted in the hole of said bushing, a head (11) of dimensions so as not to be able to pass in said hole and a cavity (13) in its shank near the head.

10. A method for manufacturing a fastening device according to any of the claims from 1 to 3, comprising the following operations:
inserting a screw (2) adapted to fix the device in an object, having a cavity (13) in its shank near the head in the bushing of a component according to any of the claims from 4 to 8, with said head at the end of the hole displaying said lip;
riveting the screw head against the bushing in order to cause the deformation of the lip so as to form a protuberance which extends within said cavity, in order to prevent the screw from being removed from the bushing.
